# EUROPEAN PATENT APPLICATION

(11) **EP 4 646 975 A1**
(43) Date of publication of application: **12.11.2025**
(21) Application number: 24213818.8
(22) Date of filing: 19.11.2024
(51) Int. Cl.: A47C 27/08

(54) **INFLATABLE PRODUCT**

(30) Priority: 09.05.2024 CN 202410573819; 09.05.2024 CN 202421002887 U
(71) Applicant: Bestway Inflatables & Material Corp., Shanghai 201812 (CN)
(72) Inventor: Zhu, Qiang, Shanghai 201812 (CN)
(74) Representative: Gulde & Partner

(57) **Abstract**

The present invention provides an inflatable product. The inflatable product comprises: a first wall; a second wall, the second wall and the first wall being connected to each other to jointly define an inflatable chamber; and a sheet-like tensioning member, the sheet-like tensioning member being disposed in the inflatable chamber. The sheet-like tensioning member has a corrugated cross-section and comprises: a plurality of first segments sequentially welded to the first wall; a plurality of second segments sequentially welded to the second wall; and a plurality of tensioning segments, the plurality of tensioning segments extending between the corresponding first segments and the corresponding second segments. The plurality of first segments and the plurality of second segments are respectively welded to the first wall and the second wall in an alternating manner, and each first segment is partially welded to the first wall. According to the inflatable product, manual labor during manufacturing can be reduced, the yield of the product can be improved, and the production efficiency is high.

## Description

### Technical Field

The present invention generally relates to an inflatable product, and in particular to an inflatable mattress for outdoor camping.

### Background Art

During outdoor camping, campers often require a portable inflatable mattress for thermal insulation and cushioning due to the cold and hard ground in the wild and a significant drop in temperature especially at night.

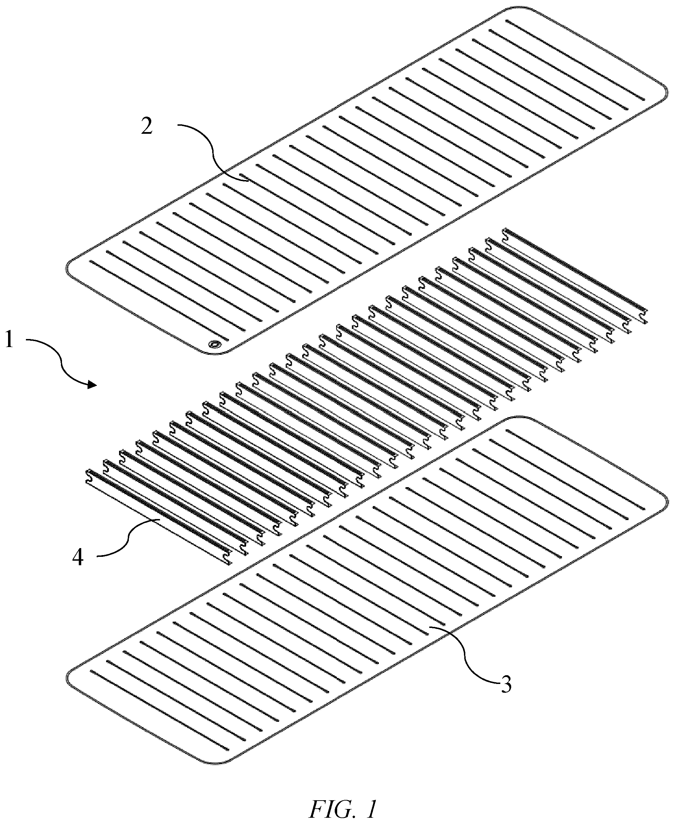

FIG. 1 shows a structure of a conventional inflatable mattress 1. The inflatable mattress 1 comprises a top sheet 2 and a bottom sheet 3, which are connected to each other to form an inflatable chamber. Generally, a human body sleeps on the top sheet 2, and the ground is located below the bottom sheet 3. The inflatable mattress 1 can reduce heat transfer between the top sheet 2 and the bottom sheet 3 of the inflatable mattress 1, to avoid the impact of low temperature from the ground on the surface where the human body is in contact with the top sheet 2, so that the human body can retain sufficient heat, thereby enjoying comfortable sleep and being adequately prepared for activities the next day.

The inflatable mattress 1 further comprises a plurality of tensioning members 4. These tensioning members 4 are arranged at intervals in the inflatable chamber, and the top end and the bottom end of each tensioning member 4 are respectively welded to the top sheet 2 and the bottom sheet 3 to ensure that the inflatable mattress 1 remains in a predetermined shape in an inflated state. For such an inflatable mattress 1, during the manufacturing thereof, it is required to manually place the plurality of tensioning members 4 in place relative to the top sheet 2 and the bottom sheet 3, and then to weld the plurality of tensioning members 4 to the top sheet 2 and the bottom sheet 3 respectively, which takes more labor and time, resulting in lower production efficiency of the inflatable mattress. Moreover, when the plurality of tensioning members 4 are manually positioned and placed, it is prone to position errors of the tensioning members, resulting in poor consistency and unstable yield of the inflatable mattress product.

### Summary of the Invention

An object of the present invention is to solve the above problems existing in the prior art, and provide an improved inflatable product.

For this purpose, the present invention provides an inflatable product, comprising: a first wall; a second wall, the second wall and the first wall being connected to each other to jointly define an inflatable chamber; and a sheet-like tensioning member, the sheet-like tensioning member being disposed in the inflatable chamber. The sheet-like tensioning member has a corrugated cross-section and comprises: a plurality of first segments sequentially welded to the first wall; a plurality of second segments sequentially welded to the second wall; and a plurality of tensioning segments, the plurality of tensioning segments extending between the corresponding first segments and the corresponding second segments. The plurality of first segments and the plurality of second segments are respectively welded to the first wall and the second wall in an alternating manner, and each first segment is partially welded to the first wall.

According to the above technical concept, the present invention may further comprise any one or more of the following optional forms.

In some optional forms, each second segment may be partially welded to the second wall.

In some optional forms, each first segment may be welded to the first wall along a first welding region, and each second segment may be welded to the second wall along a second welding region.

In some optional forms, the first welding region may comprise at least one first welding seam; and/or the second welding region may comprise at least one second welding seam.

In some optional forms, the plurality of first segments may be disposed at intervals in the length direction of the inflatable product, and the plurality of second segments may be disposed at intervals in the length direction, wherein the first welding region may comprise two linear first welding seams respectively located on opposite sides of the first segment in the length direction, and/or the second welding region may comprise two linear second welding seams respectively located on opposite sides of the second segment in the length direction.

In some optional forms, a first distance between the two first welding seams of each first segment may be approximately equal to a second distance between two adjacent first welding seams respectively on two adjacent first segments, and/or a third distance between two second welding seams of each second segment may be approximately equal to a fourth distance between two adjacent second welding seams respectively on two adjacent second segments.

In some optional forms, the first distance between the two first welding seams of each first segment may be less than the second distance between two adjacent first welding seams respectively on two adjacent first segments, and/or the third distance between the two second welding seams of each second segment may be less than the fourth distance between two adjacent second welding seams respectively on two adjacent second segments.

In some optional forms, the width of the first welding seam may be 0.5% to 25% of the width of the first segment in the length direction of the inflatable mattress; and/or the width of the second welding seam may be 0.5% to 25% of the width of the second segment in the length direction of the inflatable mattress.

In some optional forms, the first welding seam may be linear or wave-shaped; and/or the second welding seam may be linear or wave-shaped.

In some optional forms, the first welding region may comprise an annular first welding seam extending along a peripheral edge of the first segment; and/or the second welding region may comprise an annular second welding seam extending along a peripheral edge of the second segment.

In some optional forms, the tensioning segment and the adjacent first segment are mutually at a first angle, and the first angle may be an acute angle; and/or the tensioning segment and the adjacent second segment are mutually at a second angle, and the second angle may be an acute angle.

In some optional forms, the first angle may be greater than or equal to 70° and less than 90°; and/or the second angle may be greater than or equal to 70° and less than 90°.

In some optional forms, the tensioning segment and the adjacent first segment are mutually at a first angle, and the first angle may be a right angle; and/or the tensioning segment and the adj acent second segment are mutually at a second angle, and the second angle may be a right angle.

In some optional forms, at least one of the first wall and the second wall may comprise an outer layer facing away from the inflatable chamber and an inner layer facing the inflatable chamber, wherein the outer layer may be a fabric layer, and the inner layer may be a polymer material layer.

In some optional forms, the polymer material layer may be made of one or more of polyvinyl chloride, thermoplastic polyurethane elastomer, polyurethane, polypropylene, polyethylene, polyethylene terephthalate, ethylene-vinyl acetate copolymer and polyamide.

In some optional forms, the sheet-like tensioning member may be made of one or more of polyvinyl chloride, thermoplastic polyurethane elastomer, polyurethane, polypropylene, polyethylene, polyethylene terephthalate, ethylene-vinyl acetate copolymer and polyamide.

In some optional forms, the sheet-like tensioning member may comprise a non-woven fabric or a fabric.

In some optional forms, at least one side of the sheet-like tensioning member may be plated with a metal.

In some optional forms, the inflatable product may further comprise at least one connecting piece and at least one thermal insulation layer which are disposed in the inflatable chamber. The connecting piece and the thermal insulation layer may be disposed between the first wall and the sheet-like tensioning member, and may be welded to the first wall along the first welding region, and the connecting piece may be disposed between the first wall and the thermal insulation layer; and/or the connecting piece and the thermal insulation layer may be disposed between the second wall and the sheet-like tensioning member, and may be welded to the second wall along the second welding region, and the connecting piece may be disposed between the second wall and the thermal insulation layer.

In some optional forms, the thermal insulation layer may be a one-piece batting-type sheet material and made of fibers.

In some optional forms, the connecting piece may be made of one or more of polyvinyl chloride, thermoplastic polyurethane elastomer, polyurethane, polypropylene, polyethylene, polyethylene terephthalate, ethylene-vinyl acetate copolymer, and polyamide.

In some optional forms, the inflatable product further may comprise a third wall, the first wall being connected to the second wall by means of the third wall, such that the first wall, the second wall and the third wall jointly define the inflatable chamber.

In some optional forms, the length of the sheet-like tensioning member may be 80%-100% of the length of the inflatable mattress. The width of the sheet-like tensioning member may be 50%-100% of the width of the inflatable mattress.

In some optional forms, the inflatable product may be an inflatable mattress.

In some optional forms, the sheet-like tensioning member may be made of the non-woven fabric, the weight per unit area of the non-woven fabric, the first distance, the second distance, the third distance and the fourth distance may satisfy at least one of the following options: a) the ratio of the weight per unit area of the non-woven fabric to the first distance is in a range of 5 g/m²/cm to 20 g/m²/cm; b) the ratio of the weight per unit area of the non-woven fabric to the second distance is in a range of 5 g/m²/cm to 20 g/m²/cm; c) the ratio of the weight per unit area of the non-woven fabric to the third distance is in a range of 5 g/m²/cm to 20 g/m²/cm; and d) the ratio of the weight per unit area of the non-woven fabric to the fourth distance is in a range of 5 g/m²/cm to 20 g/m²/cm.

During the manufacturing of the inflatable product of the present invention, the first wall, the second wall, and the sheet-like tensioning member may be automatically fed, the sheet-like tensioning member may then be alternately welded to the first wall and the second wall, and the sheet-like tensioning member may be automatically positioned and disposed by controlling a welding spacing and/or a welding position, etc. Compared with a conventional inflatable product which comprises a plurality of tensioning structures, it is not required to manually place the plurality of tensioning structures at correct positions, thereby improving the production efficiency, and it is also possible to effectively overcome phenomena of lack of welding and excessive welding occurring during the manufacturing of the conventional inflatable product which comprises the plurality of tensioning structures, thereby improving the yield of the product.

### Brief Description of the Drawings

Other features and advantages of the present invention will be better understood from the following alternative implementations described in detail in conjunction with the accompanying drawings, in which like reference numerals represent the same or similar components. In the figures:
FIG. 1 is an exploded view of an inflatable product in the prior art;
FIG. 2 is a perspective view of an inflatable product according to a first embodiment of the present invention;
FIG. 3 is an exploded view of the inflatable product according to the first embodiment of the present invention;
FIG. 4A is a partial cross-sectional view of the inflatable product according to the first embodiment of the present invention;
FIG. 4B is a partial enlarged view of FIG. 4A;
FIG. 5A is a partial cross-sectional view of the inflatable product according to a second embodiment of the present invention;
FIG. 5B is a partial enlarged view of FIG. 5A;
FIG. 6 is an exploded view of the inflatable product according to a third embodiment of the present invention;
FIG. 7 is an exploded view of the inflatable product according to a fourth embodiment of the present invention;
FIG. 8 is a partial cross-sectional view of the inflatable product according to a fifth embodiment of the present invention;
FIG. 9 is an exploded view of the inflatable product according to the fifth embodiment of the present invention;
FIG. 10 is a perspective view of the inflatable product according to a sixth embodiment of the present invention; and
FIG. 11 is an exploded view of the inflatable product according to the sixth embodiment of the present invention; and
FIG. 12A-D are cross-sectional views of different corrugations of tensioning structures.

### Detailed Description of Embodiments

The implementation and application of embodiments will be discussed in detail below. However, it should be understood that the specific implementations discussed are merely illustrative of specific ways to implement and use the present invention, rather than limiting the scope of the present invention. In the description, the expressions of structural positions of various components, such as upper, lower, top, and bottom, are not absolute but relative. These orientation expressions are appropriate when the various components are arranged as shown in the figures, but could change accordingly when the positions of the components in the figures change.

The terms such as "first" and "second" are merely for the purpose of illustration, and should not be construed as indicating or implying the relative importance or implicitly indicating the number of technical features indicated. In the present invention, unless otherwise explicitly specified, terms "mounting", "connecting", "connection" and "fixing" should be understood in a broad sense, for example, they can be a fixed connection, a detachable connection, or an integrated connection, and can be a direct connection and can also be an indirect connection through an intermediate. For those of ordinary skill in the art, the specific meanings of the terms mentioned above in the present invention should be construed according to specific circumstances.

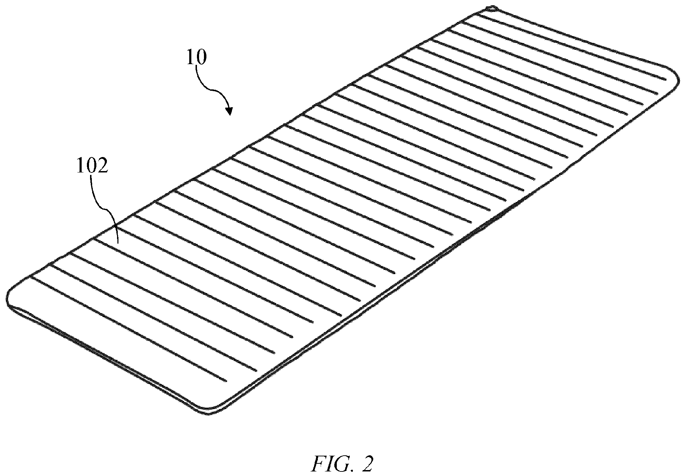

Referring to FIGS. 2 to 11, in the description of the present application, an inflatable product 10 comprises at least a first wall 102, a second wall 104, and an inflatable chamber 106 which is used for inflation and defined by at least the first wall 102 and the second wall 104. After the pressure of a gas (e.g., air) in the inflatable chamber 106 reaches a desired value, the inflatable product 10 is in an inflated state and substantially remains in a preset shape; and after the gas in the inflatable chamber 106 is discharged, the inflatable product 10 is in a deflated state, and the volume of the inflatable product 10 is greatly reduced relative to the volume thereof in the inflated state, thereby facilitating the storage of the inflatable product 10.

A sheet-like tensioning member 108 is disposed in the inflatable chamber 106 of the inflatable product 10, and the sheet-like tensioning member 108 is connected to the first wall 102 and the second wall 104, for example, by means of welding. In this description, welding methods mentioned include high-frequency welding, hot-press welding and any other suitable welding methods. The sheet-like tensioning member 108, after being tensioned, provides a tensile force to the first wall 102 and the second wall 104 to limit the deformation of the inflatable product 10, so that the inflatable product 10 remains in the preset shape after being inflated.

A plurality of non-limiting embodiments of the inflatable product according to the present invention will be described below by taking an example of the inflatable product being an inflatable mattress.

### First Embodiment

FIGS. 2 to 4B show the inflatable product according to a first embodiment of the present invention.

Referring to FIGS. 2 to 4B, in the illustrated embodiment, the inflatable product is an inflatable mattress 10 which is substantially rectangular on the whole. It should be understood that the shape of the inflatable mattress 10 is not limited in the present invention. In some embodiments not shown, the inflatable mattress 10 may also have other suitable shapes, such as a substantially oval shape and a substantially trapezoidal shape.

In the illustrated embodiment, the inflatable mattress 10 comprises the first wall 102, the second wall 104, the sheet-like tensioning member 108, and an air valve 110. However, the structure of the inflatable product is not limited thereto. In embodiments, a side wall or a plurality of side walls may be provided between the first wall 102 and the second wall 104.

A peripheral edge of the first wall 102 and a peripheral edge of the second wall 104 may be connected to each other, for example, by means of welding, to jointly define the inflatable chamber 106. The first wall 102 is configured for a user to sit and lie thereon (the first wall 102 may also be referred to as a top wall or top sheet), and the second wall 104 is configured to be in contact with the ground (the second wall 104 may also be referred to as a bottom wall or bottom sheet). The first wall 102 and the second wall 104 may have substantially the same shape and size. The first wall 102 and the second wall 104 are roughly parallel. The air valve 110 may be disposed at one end of the inflatable mattress 10 and welded to the first wall 102 in an illustrated manner, or may be welded to the second wall 104. The position of the air valve 110 is not limited in the present invention. The air valve 110 may be an electric air valve or a non-electric air valve.

Optionally, the first wall 102 may comprise an outer layer facing away from the inflatable chamber 106 and an inner layer facing the inflatable chamber 106. The inner layer of the first wall 102 is in contact with a gas inside the inflatable chamber, and the outer layer of the first wall 102 faces the outside of the inflatable chamber, that is, in contact with the gas outside the inflatable chamber. The outer layer may be a fabric layer in contact with a human body, and the inner layer may be a polymer material layer. The fabric layer may be, for example, made of one or more of cotton fiber, wool fiber, silk fiber, hemp fiber, regenerated fiber, polyester fiber, polyamide fiber, polyacrylonitrile fiber, polyvinyl alcohol fiber, polypropylene fiber, polyurethane fiber and inorganic fiber. The polymer material layer may be, for example, made of one or more of polyvinyl chloride (PVC), thermoplastic polyurethane elastomer (TPU), polyurethane (PU), polypropylene (PP), polyethylene (PE), polyethylene terephthalate (PET), ethylene vinyl acetate copolymer (EVA), polyamide (PA) and other suitable polymer materials. The second wall 104 may have the same structure as the first wall 102, that is, the second wall 104 may comprise an outer layer facing away from the inflatable chamber 106 and an inner layer facing the inflatable chamber 106. The inner layer of the second wall 104 is in contact with the gas inside the inflatable chamber, and the outer layer of the second wall 104 faces the outside of the inflatable chamber, that is, in contact with the gas outside the inflatable chamber. The outer layer may be, for example, a fabric layer made of the above materials. The inner layer may be, for example, a polymer material layer made of the above materials, such that the inflatable mattress 10 can be used on both sides. Optionally, the second wall 104 may have a structure different from the first wall 102, for example, the second wall 104 may comprise only a polymer material layer.

The sheet-like tensioning member 108 is disposed in the inflatable chamber 106. The sheet-like tensioning member 108 may have a single-layer structure or a multi-layer composite structure according to actual requirements.

The sheet-like tensioning member 108 of the single-layer structure may be a polymer sheet material made of a polymer material. The sheet-like tensioning member 108 may be formed by means of a process such as extrusion, blow molding, calendering, casting, or stretching. The polymer material may include, but is not limited to, one or more of polyvinyl chloride (PVC), thermoplastic polyurethane elastomer (TPU), polyurethane (PU), polypropylene (PP), polyethylene (PE), polyethylene terephthalate (PET), ethylene-vinyl acetate copolymer (EVA), polyamide (PA) and other suitable polymer materials. When the sheet-like tensioning member 108 of the single-layer structure is a PVC film, the thickness of the PVC film may be in a range of 0.1 mm to 1 mm, preferably in a range of 0.25 mm to 0.5 mm, and more preferably about 0.3 mm. The density of the PVC film may be in a range of 1.0 g/cm³ to 1.5 g/cm³, preferably in a range of 1.20 g/cm³ to 1.35 g/cm³, and more preferably about 1.25 g/cm³. When the sheet-like tensioning member 108 of the single-layer structure is a TPU film, the thickness of the TPU film may be in a range of 0.05 mm to 0.5 mm, preferably in a range of 0.1 mm to 0.3 mm, and more preferably about 0.14 mm. The density of the TPU film may be in a range of 1.0 g/cm³ to 1.5 g/cm³, preferably in a range of 1.20 g/cm³ to 1.35 g/cm³, and more preferably about 1.20 g/cm³. Optionally, the polymer material of the sheet-like tensioning member 108 may be the same as the material of the polymer material layer of the first wall 102 and/or the second wall 104. Thereby, the welding of the sheet-like tensioning member 108 to the first wall 102 and the second wall 104 may be eased. The sheet-like tensioning member 108 of the single-layer structure may also be made of a fabric or a non-woven fabric. The fabric is optionally finely and closely woven or formed into a mesh structure. The fabric may be made of one or more of polyester fiber, polyamide fiber, polyacrylonitrile fiber, polyvinyl alcohol fiber, polypropylene fiber, and polyurethane fiber. According to manufacturing process categories, the non-woven fabric may include a hot-pressed non-woven fabric, a spunlace non-woven fabric, a needle-punched non-woven fabric, etc. The non-woven fabric may be made of one or more of polypropylene (PP), polyethylene (PE), and polyester fiber.

The sheet-like tensioning member 108 of the multi-layer composite structure may be formed by fitting/bonding two or more layers of sheet materials by means of adhesion, welding or other methods, and each layer of sheet material may be the polymer sheet material, the fabric, or the non-woven fabric as described above. Optionally, the sheet-like tensioning member 108 of the multi-layer composite structure may be a double-layer sheet formed by fitting a fabric layer or non-woven layer and the polymer layer as described above. Optionally, the sheet-like tensioning member 108 of the multi-layer composite structure may be a three-layer sheet formed by fitting two polymer layers as described above and a mesh fabric layer sandwiched therebetween.

Optionally, at least one side (i.e., one side or two sides) of the sheet-like tensioning member 108 may be plated with a metal, which includes, but is not limited to suitable metal materials such as aluminum, zinc, copper, silver or gold, and preferably, the metal is aluminum. Thermal convection and thermal radiation are main heat transfer methods existing for the inflatable mattress, while the sheet-like tensioning member plated with the metal on a surface has a good function of reflecting radiated heat and can reflect the heat radiated by the human body back to the human body, reducing heat loss, and improving the thermal insulation effect of the inflatable mattress. Preferably, the side of the sheet-like tensioning member 108 facing a person resting on the inflatable product, i.e. facing the first wall 102 is plated with a metal. Optionally, the two sides of the sheet-like tensioning member 108 may both be plated with the metal to further improve the thermal insulation effect of the inflatable mattress. Optionally, the sheet-like tensioning member 108 plated with the metal on the surface comprises a non-woven fabric or a fabric to form a non-dense metal coating on the surface of the sheet-like tensioning member 108, so that it is conducive to the welding of the sheet-like tensioning member 108 to the first wall 102 and the second wall 104 by means of welding. For example, the sheet-like tensioning member 108 may comprise a layer made of the non-woven fabric or the fabric, or the sheet-like tensioning member 108 may be made of only the non-woven fabric or the fabric.

In the illustrated embodiment, the sheet-like tensioning member 108 is a continuous sheet-like material. The sheet-like tensioning member 108 in the embodiment shown has a corrugated cross-section extending in the length direction of the sheet-like tensioning member 108. Corrugation throughout the invention may refer to a shape of the sheet-like tensioning member 108 that meanders along the length direction of the inflatable product between the first wall 102 and the second wall back and forth. In the embodiment shown, the sheet-like tensioning member 108 is alternately welded to the first wall 102 and the second wall 104 in the length direction L of the inflatable mattress 10. The sheet-like tensioning member 108 comprises a plurality of first segments 112, a plurality of second segments 114, and a plurality of tensioning segments 116. The plurality of first segments 112 are welded to the first wall 102, preferably sequentially welded. The plurality of second segments 114 are welded to the second wall 104, preferably sequentially welded. The plurality of tensioning segments 116 extend between the corresponding first segments 112 and the corresponding second segments 114. The plurality of first segments 112 and the plurality of second segments 114 are respectively connected to the first wall 102 and the second wall 104 in an alternating manner. Each of the plurality of first segments 112 may be partially welded to the first wall 102. Each of the plurality of second segments 114 may be partially welded to the second wall 104.

In the illustrated embodiment, each of the plurality of first segments 112 extends roughly parallel to the first wall 102/along the first wall 102. Each of the plurality of second segments 114 extends roughly parallel to the second wall 104/along the second wall 104. Each of the plurality of tensioning segments 116 extends between the first segment 112 and the second segment 114 that are adjacent to the tensioning segment.

When the inflatable mattress 10 is in an inflated state, the plurality of tensioning segments 116 of the sheet-like tensioning member 108 are tensile-loaded and provide a tensile force to the first wall 102 and the second wall 104 to limit the deformation of the inflatable mattress 10, thereby maintaining the inflatable mattress 10 in a predetermined shape.

In the illustrated embodiment, that inflatable mattress 10 comprises only one sheet-like tensioning member 108. Optionally, in the inflated state of the inflatable mattress 10, the length of the sheet-like tensioning member 108 having the corrugated cross-section is 80%-100% of the length of the inflatable mattress 10, and the width of the sheet-like tensioning member 108 is 50%-100% of the width of the inflatable mattress 10, to provide, by using only one sheet-like tensioning member 108, a uniform tensioning force at a plurality of positions distributed substantially on the entire inflatable mattress 10. However, in an embodiment also two sheet-like tensioning members 108 divided in the width direction may be employed, for example, to form an inflatable product adapted to two persons resting thereon.

In the illustrated embodiment, the plurality of first segments 112 are disposed at intervals in the length direction L of the inflatable mattress 10, and the plurality of second segments 114 are disposed at intervals in the length direction L of the inflatable mattress 10. The plurality of first segments 112 and the plurality of second segments 114 are disposed alternately in the length direction L of the inflatable mattress 10, and each first segment 112 and two adjacent second segments 114 are connected to each other by means of two tensioning segments 116. The first segment 112, the second segment 114 and the tensioning segment 116 may be all in a strip-like shape and extend in the width direction W of the inflatable mattress 10. In the illustrated embodiment, the width S1 of the first segment 112 is the same as the width S2 of the second segment 114. Optionally, the width S1 of the first segment 112 may be in a range of 1 cm to 20 cm. The width S2 of the second segment 114 may be in a range of 1 cm to 20 cm. The corrugation may extend along the length direction L, while along the width direction W the structure may remain constant.

It should be contemplated that, in some other embodiments not illustrated, the first segment and the second segment may also have different widths. It should also be contemplated that, in some other embodiments not illustrated, the sheet-like tensioning member may be alternately welded to the first wall and the second wall in the width direction W of the inflatable mattress, such that the plurality of first segments are disposed at intervals in the width direction W of the inflatable mattress, and the plurality of second segments are disposed at intervals in the width direction W of the inflatable mattress.

In the illustrated embodiment, the plurality of first segments 112 are welded to the first wall 102 along the plurality of first welding regions 118. Each of the plurality of first segments 112 is welded to the first wall 102 along a corresponding one of the first welding regions 118. The plurality of second segments 114 are welded to the second wall 104 along the plurality of second welding regions 120. Each of the plurality of second segments 114 is welded to the second wall 104 along a corresponding one of the second welding regions 120.

The area of the first welding region 118 on each first segment 112 accounts for 1%-50% of the area of the corresponding first segment 112. The area of the second welding region 120 on each second segment 114 accounts for 1%-50% of the area of the corresponding second segment 114. The first segment 112 is partially welded to the first wall 102. The second segment 114 is partially welded to the second wall 104. In this way, an excessive welding area can be avoided, and the risk of breakage of the first wall 102 or the second wall 104 is reduced during the welding.

In the illustrated embodiment, each first welding region 118 comprises two first welding seams 122, preferably linear first welding seams 122, and the two linear first welding seams 122 are respectively located on opposite sides or ends of the first segment 112 in the length direction L of the inflatable mattress 10. Each second welding region 120 comprises two second welding seams 124, preferably linear second welding seams 124, and the two linear second welding seams 124 are respectively located on opposite sides or ends of the second segment 114 in the length direction L of the inflatable mattress 10. The first welding seams 122 and the second welding seams 124 may both be linear. i.e. line-shaped, and extend in the width direction W of the inflatable mattress 10. The width LW1 of each first welding seam 122 accounts for 0.5%-25% of the width S1 of the first segment 112 in the length direction L of the inflatable mattress 10. The width LW2 of each second welding seam 124 accounts for 0.5%-25% of the width S2 of the second segment 114 in the length direction L of the inflatable mattress 10. In some embodiments, the width LW1 of the first welding seam 122 is equal to the width LW2 of the second welding seam 124. In a vertical cut through the inflatable product, the first and second welding seams 112, 114 may at least partially overlap.

The width LW1 of the first welding seam 122 may be in a range of 1 mm to 6 mm, preferably in a range of 2 mm to 4 mm, and more preferably about 3 mm. The width LW2 of the second welding seam 124 may be in a range of 1 mm to 6 mm, preferably in a range of 2 mm to 4 mm, and more preferably about 3 mm.

In the inflated state, a first distance between two first welding seams 122 of one first segment 112, that is, the width of an unwelded region between the two first welding seams, is marked as NW1; a second distance between two adjacent first welding seams 122 respectively on two adjacent first segments 112 is marked as NW2; a third distance between two second welding seams 124 of one second segment 114, that is, the width of an unwelded region between the two second welding seams is marked as NW3; and a fourth distance between two adjacent second welding seams 124 respectively on two adjacent second segments 114 is marked as NW4. The first distance NW1 may be in a range of 3 cm to 15 cm, preferably in a range of 4 cm to 12 cm, and more preferably about 5 cm. The second distance NW2 may be in a range of 3 cm to 15 cm, preferably in a range of 4 cm to 12 cm, and more preferably about 5 cm. The third distance NW3 may be in a range of 3 cm to 15 cm, preferably in a range of 4 cm to 12 cm, and more preferably about 5 cm. The fourth distance NW4 may be in a range of 3 cm to 15 cm, preferably in a range of 4 cm to 12 cm, and more preferably about 5 cm.

When the sheet-like tensioning member is made of the non-woven fabric, the weight per unit area of the non-woven fabric may be in a range of 10 g/m² to 150 g/m², preferably in a range of 30 g/m² to 90 g/m², and more preferably about 40 g/m². The thickness of the non-woven fabric may be in a range of 0.05mm to 1mm, preferably in a range of 0.1mm to 0.5mm, and more preferably about 0.2mm. The non-woven fabric is made of oriented or randomly arranged fibers, the denier of the fibers may be in a range of 1 D to 5 D (D represents for Denier), preferably in a range of 1.5 D to 4 D, and more preferably 2 D. In some embodiments, in the inflated state, the weight per unit area of the non-woven fabric, the first distance NW1, the second distance NW2, the third distance NW3 and the fourth distance NW4 may satisfy at least one of the following options: a) the ratio of the weight per unit area of the non-woven fabric to the first distance NW1 may be in a range of 1 g/m²/cm to 50 g/m²/cm, preferably in a range of 5 g/m²/cm to 20 g/m²/cm, and more preferably about 8 g/m²/cm; b) the ratio of the weight per unit area of the non-woven fabric to the second distance NW2 may be in a range of 1 g/m²/cm to 50 g/m²/cm, preferably in a range of 5 g/m²/cm to 20 g/m²/cm, and more preferably about 8 g/m²/cm; c) the ratio of the weight per unit area of the non-woven fabric to the third distance NW3 may be in a range of 1 g/m²/cm to 50 g/m²/cm, preferably in a range of 5 g/m²/cm to 20 g/m²/cm, and more preferably about 8 g/m²/cm; and d) the ratio of the weight per unit area of the non-woven fabric to the fourth distance NW4 may be in a range of 1 g/m²/cm to 50 g/m²/cm, preferably in a range of 5 g/m²/cm to 20 g/m²/cm, and more preferably about 8 g/m²/cm. When the inflatable product is an inflatable pad, the volume ratio of the inflatable pad to the non-woven fabric may be greater than 30, preferably greater than 60, and more preferably about 150.

It should be understood that, although the first segment 112 is welded to the first wall 102 along two linear first welding seams 122 in the illustrated embodiment, the first segment may be welded to the first wall along more than two linear first welding seams in some other embodiments not illustrated. Although the second segment 114 is welded to the second wall 104 along two linear second welding seams 124 in the illustrated embodiment, the second segment may be welded to the second wall along more than two linear second welding seams in some other embodiments not illustrated.

Since the sheet-like tensioning member 108 is welded to the first wall 102 along a plurality of first welding seams 122 and to the second wall 104 along a plurality of second welding seams 124, stripe patterns are formed on the first wall 102 and the second wall 104. It should be contemplated that a spacing between two adjacent first welding seams 122 may be the same or different, and thus uniform or uneven stripe patterns are formed on the first wall 102. Similarly, a spacing between two adjacent second welding seams 124 may be the same or different, and thus uniform or uneven stripe patterns are formed on the second wall 104.

In the illustrated embodiment, each of the plurality of tensioning segments 116 extends between the first wall 102 and the second wall 104, more specifically, each tensioning segment 116 extends from one first welding seam 122 of the adjacent first segment 112 to one second welding seam 124 of the adjacent second segment 114, and the height S3 of the tensioning segment 116 depends on a spacing between the first welding seam 122 and the second welding seam 124. Each tensioning segments 116 may have a rectangular shape. It may also have other shapes, such as a trapezoidal shape, depending on the respective sizes of the first and second segments 112, 114.

When the inflatable mattress 10 is in the inflated state, the tensioning segment 116, and the first segment 112 and the second segment 114 which are adjacent thereto jointly form a substantially Z-shaped structure. The tensioning segment 116 and the adjacent first segment 112 are mutually at a first angle α, and the first angle α is an acute angle. Optionally, the first angle α is greater than or equal to 60° and less than 90°, preferably greater than or equal to 70° and less than 90°, and more preferably about 85°. The tensioning segment 116 and the adjacent second segment 114 are mutually at a second angle β, and the second angle β is an acute angle. Optionally, the second angle β is greater than or equal to 60° and less than 90°, preferably greater than or equal to 70° and less than 90°, and more preferably about 85°. The thickness of the inflatable mattress 10 in the inflated state depends on the height S3 of the tensioning segment 116, the first angle α and the second angle β.

Moreover, the first welding seam 122 and the second welding seam 124 adjacent to the tensioning segment 116 may be substantially aligned in the thickness direction T of the inflatable mattress 10. The first distance NW1 between two first welding seams 122 of a first segment 112 may be approximately equal to the second distance NW2 between two first welding seams 122 respectively on two adjacent first segments 112. In the inflated state of the inflatable mattress 10, the first wall 102 is formed with a raised portion 113a between two first welding seams 122 of a first segment 112, the first wall 102 is formed with a raised portion 113b between two adjacent first welding seams 122 respectively on two adjacent first segments 112, and the raised portion 113a and the raised portion 113b may be approximately the same in size. The third distance NW3 between two second welding seams 124 of a second segment 114 may be approximately equal to the fourth distance NW4 between two adjacent second welding seams 124 respectively on two adjacent second segments 114. In the inflated state of the inflatable mattress 10, the second wall 104 is formed with a raised portion 115b between two second welding seams 124 of a second segment 114, and the second wall 104 is formed with a raised portion 115a between two adjacent second welding seams 124 respectively on two adjacent second segments 114. The raised portion 115a and the raised portion 115b may be approximately the same in size.

During the manufacturing of the inflatable mattress 10, the first wall 102, the second wall 104, and the sheet-like tensioning member 108 may be automatically fed, the sheet-like tensioning member 108 is then alternately welded to the first wall 102 and the second wall 104, and by controlling a welding spacing and/or a welding position, the control is performed, for example, on the above-mentioned spacing between two adjacent first welding seams 122, the spacing between two adjacent second welding seams 124, the spacing between the first welding seam 122 and the second welding seam 124 which are adjacent to each other, the first angle, and the second angle, and thus the spacing of the stripe patterns formed on the first wall 102 and the second wall 104 and the thickness of the inflatable mattress 10 are controlled.

Compared with a conventional inflatable mattress which comprises a plurality of tensioning structures, during the manufacturing of the inflatable mattress 10, it is not required to manually place the plurality of tensioning structures at correct positions, thereby improving the production efficiency. Also, it is possible to effectively avoid lack of welding and excessive welding occurring during the manufacturing of the conventional inflatable mattress which comprises the plurality of tensioning structures, thereby reducing the defective rate of the product.

In some embodiments, the sheet-like tensioning member 108 may be welded to the first wall 102 and the second wall 104 by means of high-frequency welding. The operating frequency of the high-frequency welding may be in a range of 5 MHz to 40 MHz, preferably in a range of 10 MHz to 20 MHz, and more preferably around 15 MHz. The operating pressure of the high-frequency welding may be in a range of 5 kgf/cm² to 70 kgf/cm², preferably in a range of 10 kgf/cm² to 50 kgf/cm², and more preferably about 32 kgf/cm².

In some other embodiments, the sheet-like tensioning member 108 may be welded to the first wall 102 and the second wall 104 by means of hot-press welding. The operating pressure of the hot-press welding may be in a range of 5 kgf/cm² to 70 kgf/cm², preferably in a range of 10 kgf/cm² to 50 kgf/cm², and more preferably about 32 kgf/cm².

It should be understood that the sheet-like tensioning member 108 can be unfolded to extend substantially along a plane before it is not welded to the first wall 102 and the second wall 104. In this description, the area of the sheet-like tensioning member in the aforementioned unfolded state is referred to as an unfolding area of the sheet-like tensioning member. The ratio of the unfolding area of the sheet-like tensioning member to the area of the first wall may be in a range of 1.2 to 10, preferably in a range of 1.5 to 5, and more preferably about 2. The ratio of the unfolding area of the sheet-like tensioning member to the area of the second wall may be in a range of 1.2 to 10, preferably in a range of 1.5 to 5, and more preferably about 2.

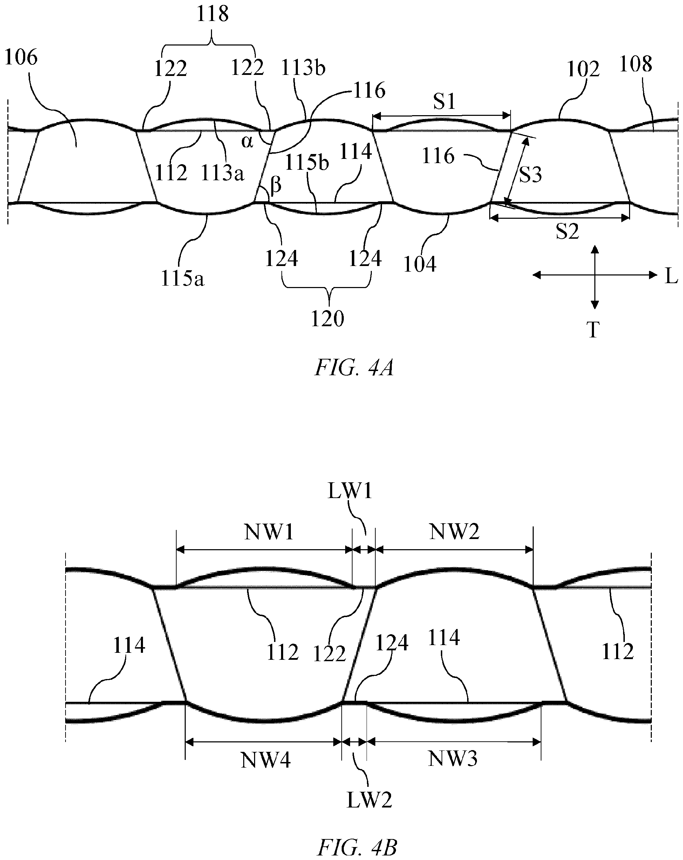

In this description, each time the sheet-like tensioning member 108 in the inflatable product 10 forms a first angle α or a second angle β mentioned above, it is considered as achieving one bend. Taking FIG. 4B as an example, a portion of the sheet-like tensioning member 108 shown in FIG. 4B is bent 6 times. The ratio of the number of bends of the sheet-like tensioning member to the length of the inflatable product (i.e., the dimension of the inflatable product in the length direction L) may be in a range of 18 times/m to 66 times/m, preferably in a range of 28 times/m to 56 times/m, and more preferably about 45 times/m.

### Second Embodiment

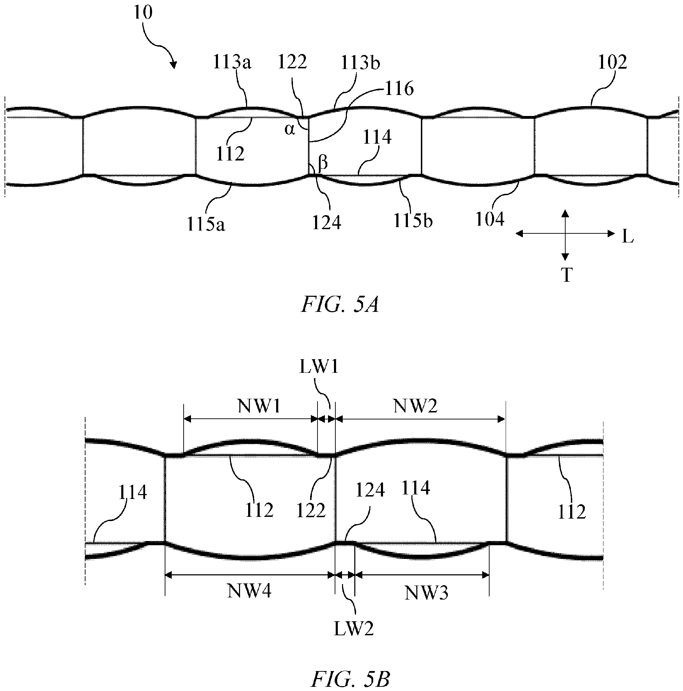

FIGS. 5A and 5B show the inflatable product according to a second embodiment of the present invention, that is, the inflatable mattress 10. It should be understood that the inflatable mattress of the second embodiment has a similar structure to the inflatable mattress of the first embodiment, and therefore the similarities to the inflatable mattress of the first embodiment may be understood with the aid of the above specific descriptions, and may not be repeated again herein.

Referring to FIGS. 5A and 5B, the differences from the inflatable mattress of the first embodiment lie in that, with regard to the inflatable mattress 10 of the second embodiment, when the inflatable mattress 10 is in the inflated state, the first angle α formed by the first segment 112 and the tensioning segment 116 and the second angle β formed by the second segment 114 and the tensioning segment 116 are both substantially right angles, such that the first welding seam 122 and the second welding seam 124 adjacent to the tensioning segment 116 are offset from each other in the thickness direction T of the inflatable mattress 10. The first segment 112 and the second segment 114 may have the same width. The first distance NW1 between two first welding seams 122 of a first segment 112 may be less than the second distance NW2 between two adjacent first welding seams 122 respectively on two adjacent first segments 112. In the inflated state of the inflatable mattress 10, the raised portion 113a of the first wall 102 formed between two first welding seams 122 of a first segment 112 may be less than the raised portion 113b of the first wall 102 formed between two adjacent first welding seams 122 respectively on two adjacent first segments 112. The third distance NW3 between two second welding seams 124 of a second segment 114 may be less than the fourth distance NW4 between two adjacent second welding seams 124 respectively on two adjacent second segments 114. In the inflated state of the inflatable mattress 10, the raised portion 115b of the second wall 104 formed between two second welding seams 124 of a second segment 114 may be less than the raised portion 115a of the second wall 104 formed between two adjacent second welding seams 124 respectively on two adjacent second segments 114. In a vertical cut through the inflatable product, the first and second welding seams 112, 114 may not overlap.

### Third embodiment

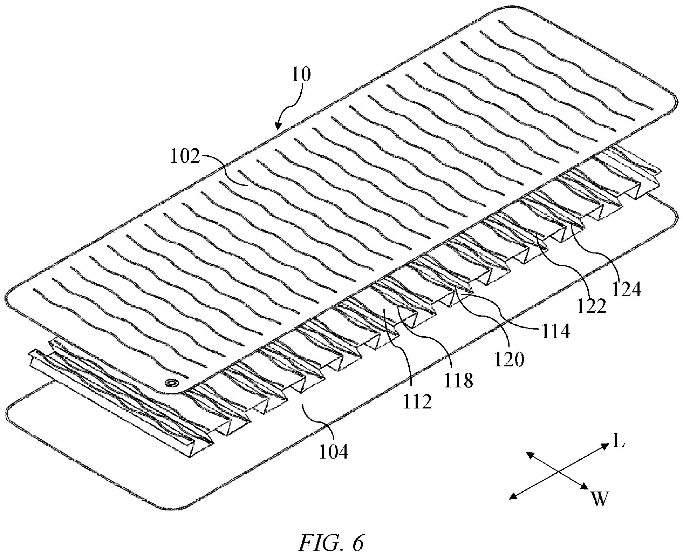

FIG. 6 shows the inflatable product according to a third embodiment of the present invention, that is, the inflatable mattress 10. It should be understood that the inflatable mattress of the third embodiment has a similar structure to the inflatable mattress of the first embodiment, and therefore the similarities to the inflatable mattress of the first embodiment may be understood with the aid of the above specific descriptions, and may not be repeated again herein.

Referring to FIG. 6, the differences from the inflatable mattress of the first embodiment lie in that, in the inflatable mattress 10 of the third embodiment, the first segment 112 is welded to the first wall 102 along the first welding region 118 to form two linear-extending first welding seams 122, and the two linear-extending first welding seams 122 may be curved or wave-shaped. The second segment 114 is welded to the second wall 104 along the second welding region 120 to form two linear-extending second welding seams 124, and the two linear-extending second welding seams 124 may be curved or wave-shaped.

### Fourth Embodiment

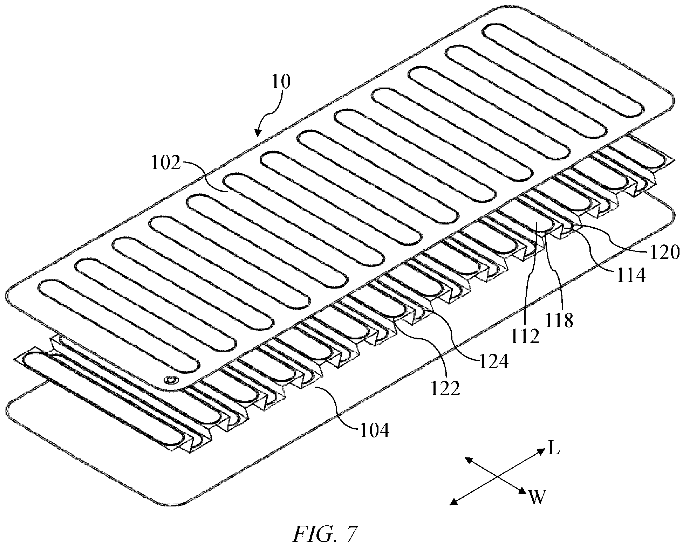

FIG. 7 shows the inflatable product according to a fourth embodiment of the present invention, that is, the inflatable mattress 10. It should be understood that the inflatable mattress of the fourth embodiment has a similar structure to the inflatable mattress of the first embodiment, and therefore the similarities to the inflatable mattress of the first embodiment may be understood with the aid of the above specific descriptions, and may not be repeated again herein.

Referring to FIG. 7, the differences from the inflatable mattress of the first embodiment lie in that, in the inflatable mattress 10 of the fourth embodiment, the first segment 112 is welded to the first wall 102 along the first welding region 118, and the first welding region 118 comprises an annular first welding seam 122. The second segment 114 is welded to the second wall 104 along the second welding region 120, and the second welding region 120 comprises an annular second welding seam 124. In the illustrated embodiment, the first welding seam 122 extends along a peripheral edge of the first segment 112, and the second welding seam 124 extends along a peripheral edge of the second segment 114. The annular first and second welding seams 122, 124 may have an ellipsoidal shape. The annular first and second welding seams 122, 124 may have linear and circular parts. The annular first and second welding seams 122, 124 may extend in a line along the width direction of the inflatable product, wherein the two sides of the first or second segments 112, 114, respectively, are connected by circular or annular welding seams.

It should be contemplated that in some other embodiments not illustrated, each first welding region may further comprise two or more annular first welding seams, for example, the first welding region comprises two annular first welding seams, wherein one annular first welding seam surrounds the other annular first welding seam; and similarly, the second welding region may further comprise two or more annular second welding seams.

### Fifth Embodiment

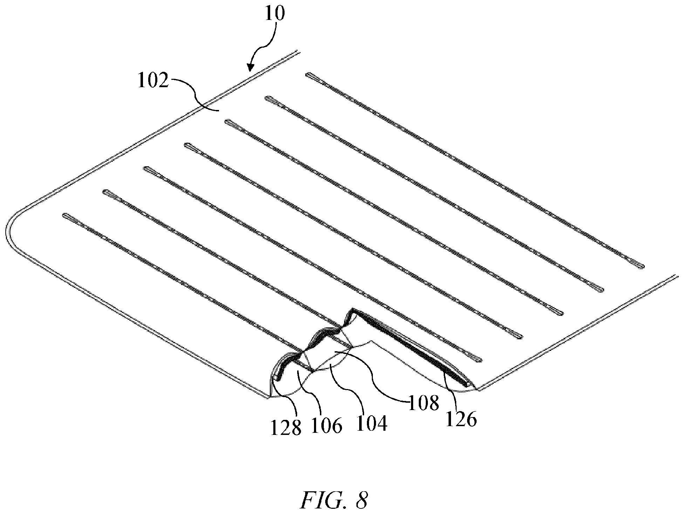

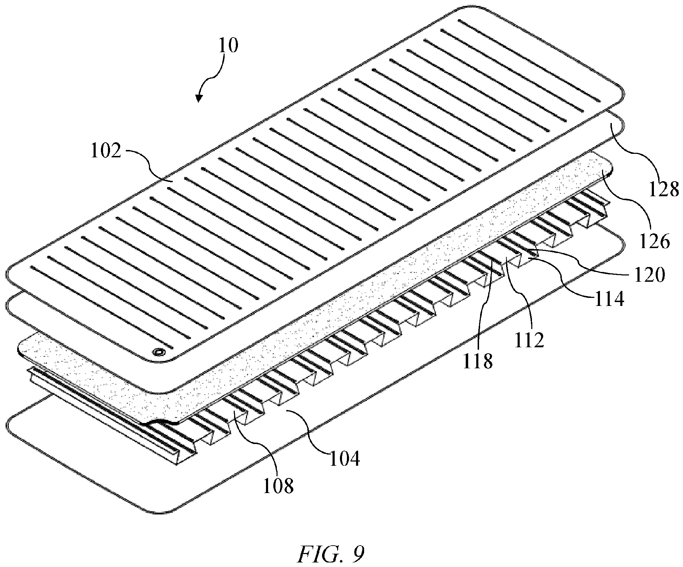

FIGS. 8 and 9 show the inflatable product according to a fifth embodiment of the present invention, that is, the inflatable mattress 10. It should be understood that the inflatable mattress of the fifth embodiment has a similar structure to the inflatable mattress of the first embodiment, and therefore the similarities to the inflatable mattress of the first embodiment may be understood with the aid of the above specific descriptions, and may not be repeated again herein.

Referring to FIGS. 8 and 9, the differences from the inflatable mattress of the first embodiment lie in that, in the inflatable mattress of the fifth embodiment, the inflatable mattress 10 further comprises a thermal insulation layer 126 and a connecting piece 128 which are disposed in the inflatable chamber 106, and the thermal insulation layer 126 and the connecting piece 128 are disposed between the first wall 102 and the sheet-like tensioning member 108. The thermal insulation layer 126 and the connecting piece 128 may have substantially the same shapes and sizes as the first wall 102 and the second wall 104. The thermal insulation layer 126 may be a one-piece batting-type sheet material and made of fibers. The thermal insulation layer 126 may be made of one or more of cotton fiber, wool fiber, viscose fiber, acetate fiber, polyester fiber, polyamide fiber, polyacrylonitrile fiber, polyvinyl alcohol fiber, polypropylene fiber, and polyurethane fiber. The connecting piece 128 may be made of the same material as the polymer material layer of the first wall 102. For example, the connecting piece 128 may be made of one or more of polyvinyl chloride (PVC), thermoplastic polyurethane elastomer (TPU), polyurethane (PU), polypropylene (PP), polyethylene (PE), polyethylene terephthalate (PET), ethylene-vinyl acetate copolymer (EVA), polyamide (PA) and other suitable polymer materials.

In the illustrated embodiment, the plurality of first segments 112 of the sheet-like tensioning member 108 of the inflatable mattress 10 are welded to the first wall 102 along the plurality of first welding regions 118, and the plurality of second segments 114 of the sheet-like tensioning member 108 are welded to the second wall 104 along the plurality of second welding regions 120. The connecting piece 128 is disposed between the first wall 102 and the thermal insulation layer 126. The connecting piece 128 and the thermal insulation layer 126 are also welded to the first wall 102 along the plurality of first welding regions 118 mentioned above. At the position of each first welding region 118, the first wall 102, the connecting piece 128, the thermal insulation layer 126 and the first segment 112 of the sheet-like tensioning member 108 may be welded together. In other words, during the welding, the first wall 102, the connecting piece 128, the thermal insulation layer 126 and the sheet-like tensioning member 108 may be welded together along the first welding region 118, which allows the thermal insulation layer 126 to be securely fixed to the first wall 102. It should be understood that the thickness of the thermal insulation layer 126 may be decreased at the positions of these first welding regions 118 after the welding. It should be understood that the structure of the sheet-like tensioning member 108 and a structure of welding the sheet-like tensioning member 108 to the first wall and the second wall in the foregoing embodiments may both be applied to this embodiment.

It should be contemplated that in some other embodiments not illustrated, the inflatable mattress may comprise a thermal insulation layer and a connecting piece which are disposed between the second wall and the sheet-like tensioning member, wherein the connecting piece is disposed between the second wall and the thermal insulation layer, and the connecting piece and the thermal insulation layer are welded to the second wall along the plurality of second welding regions mentioned above.

In yet other embodiments not illustrated, the inflatable mattress may comprise more than one thermal insulation layer and more than one connecting piece. For example, the inflatable mattress may comprise two thermal insulation layers and two connecting pieces, wherein one connecting piece and one thermal insulation layer are disposed between the first wall and the sheet-like tensioning member (the connecting piece is disposed between the first wall and the thermal insulation layer) and are welded to the first wall along the plurality of first welding regions mentioned above, and the other connecting piece and the other thermal insulation layer are disposed between the second wall and the sheet-like tensioning member (the connecting piece is disposed between the second wall and the thermal insulation layer) and welded to the second wall along the plurality of second welding regions mentioned above. The connecting piece 128 may also be omitted.

### Sixth Embodiment

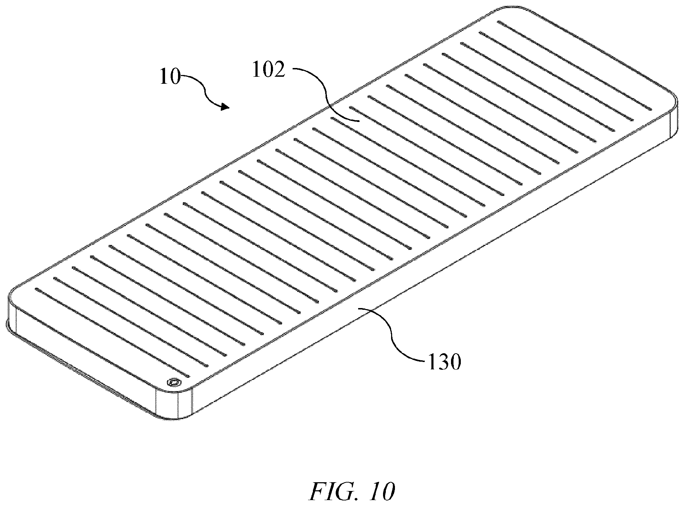

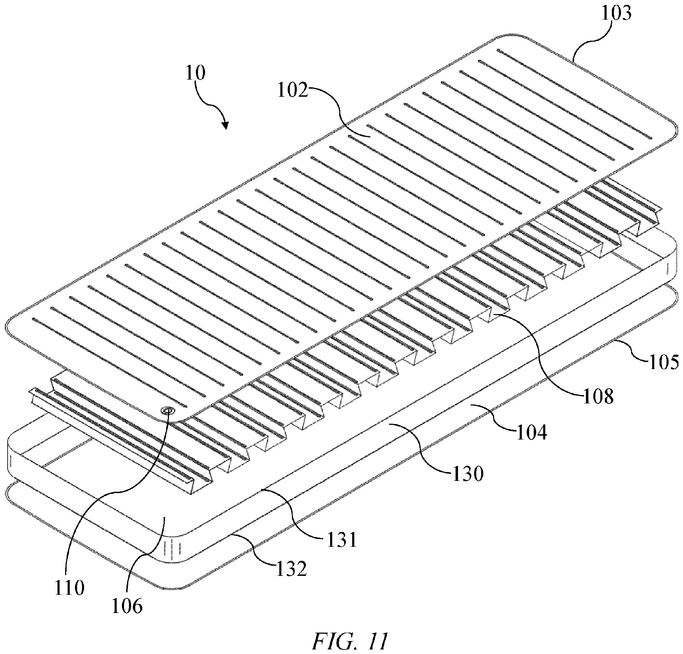

FIGS. 10 and 11 show the inflatable product according to a sixth embodiment of the present invention, that is, the inflatable mattress 10. It should be understood that the inflatable mattress of the sixth embodiment has a similar structure to the inflatable mattress of the first embodiment, and therefore the similarities to the inflatable mattress of the first embodiment may be understood with the aid of the above specific descriptions, and may not be repeated again herein.

Referring to FIGS. 10 and 11, the differences from the inflatable mattress of the first embodiment lie in that, the inflatable mattress 10 of the sixth embodiment further comprises a third wall 130, and the peripheral edge 103 of the first wall 102 and the peripheral edge 105 of the second wall 104 are connected by means of the third wall 130. Specifically, the peripheral edge 103 of the first wall 102 is welded to a top edge 131 of the third wall 130, and the peripheral edge 105 of the second wall 104 is welded to a bottom edge 132 of the third wall 130, such that the first wall 102, the second wall 104 and the third wall 130 jointly define the inflatable chamber 106. In the illustrated embodiment, the air valve 110 is welded to the first wall 102. In some other embodiments not illustrated, the air valve 110 may also be welded to the second wall 104 or the third wall 130.

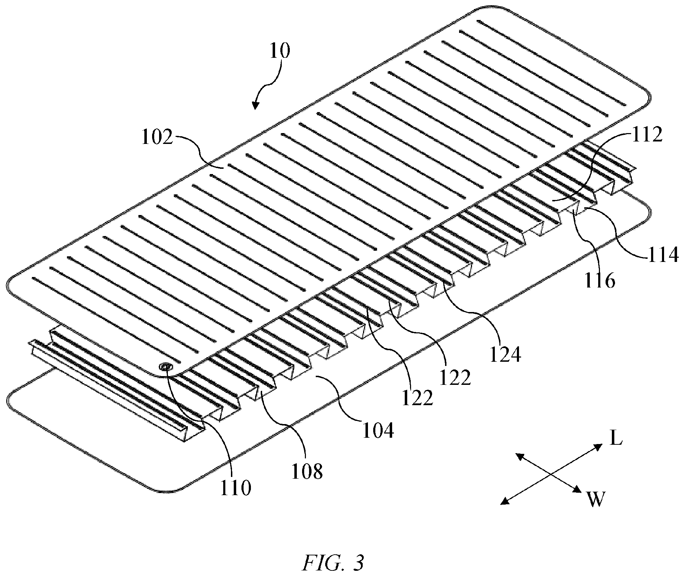

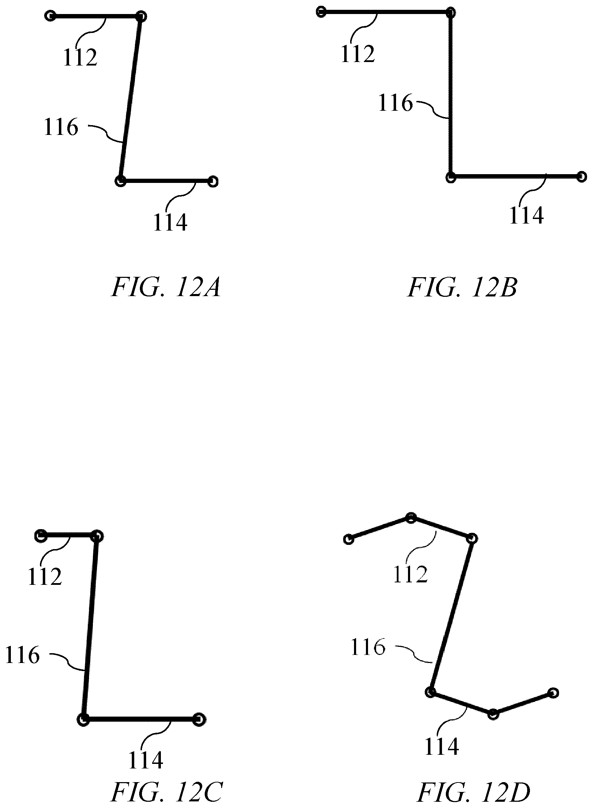

The material of the third wall 130 may be, for example, the same as the polymer material layer of the first wall 102 or the second wall 104. For example, the third wall 130 may be made of one or more of polyvinyl chloride (PVC), thermoplastic polyurethane elastomer (TPU), polyurethane (PU), polypropylene (PP), polyethylene (PE), polyethylene terephthalate (PET), ethylene-vinyl acetate copolymer (EVA), polyamide (PA) and other suitable polymer materials. FIG. 12A-D are cross-sectional views of different corrugations of tensioning structures 108. FIG. 12A shows a first and a second segment 112, 114, of a tensioning structure 108 according to the first embodiment of FIGS. 3-4B. In this embodiment, the corrugation has a Z-like shape. The tensioning segment 116 is inclined. The circles indicate the locations of affixation to the first wall 102 and the second wall 104, respectively. FIG. 12B shows a first and a second segment 112, 114, of a tensioning structure 108 according to the second embodiment of FIGS. 5A and 5B. In this embodiment, the corrugation has a step-like shape. The tensioning segment 116 extends perpendicular to the first and second segments 112, 114. The first segment 112 may be shorter than the second segment 114 which is shown in FIG. 12C. An alternative corrugation is shown in FIG. 12D. An additional welding location is added to the first segments between the two peripheral welding locations described in the first and second embodiment. An additional welding location is added to the second segments between the two peripheral welding locations described in the first and second embodiment. The shape of the first and second segment of cross-sectional views is now segmentally linear. This may further improve the strength of the tensioning structure. However, it is pointed out that the shape of the corrugation is not limited to the examples shown.

It should be understood that the structure of the sheet-like tensioning member 108 and the structure of welding the sheet-like tensioning member 108 to the first wall 102 and the second wall 104 in the foregoing embodiments may both be applied to this embodiment. The thermal insulation layer described in the fifth embodiment may also be applied to this embodiment.

It should be understood that the embodiments described above are not exhaustive, and on the basis of the disclosure of the first to sixth embodiments, the present invention also covers various implementation variants readily conceivable to those skilled in the art.

For example, the sixth embodiment is equivalent to adding the third wall on the basis of the first embodiment. It should be understood that the third wall may also be added on the basis of the second to fifth embodiments to form some other embodiments not illustrated.

For example, in the illustrated embodiment, the first welding region and the second welding region (which may be collectively referred to as the welding region) each comprise a welding seam. It should be contemplated that welding seams in other shapes, such as zigzag-shaped welding seams, may also be used, in addition to the first welding seams and the second welding seams which are the linear and wave-shaped in the first embodiment and the third embodiment. In addition, it should be contemplated that in some embodiments not illustrated, the welding region may comprise only a plurality of welding points, and the plurality of welding points may be uniformly distributed on the first segment or the second segment. It should also be contemplated that, in some other embodiments not illustrated, the welding region may comprise a combination of welding seams and welding points.

For another example, in the illustrated embodiment, the first welding region and the second welding region have the same form, for example, including the linear welding seams, the wave-shaped welding seams or the annular welding seams. It should be contemplated that, in some embodiments not illustrated, the first welding region and the second welding region may have different forms. For example, the first welding region comprises the linear welding seams, and the second welding region comprises the wave-shaped welding seams; or, for another example, the first welding region comprises the annular welding seams, and the second welding region comprises the wave-shaped welding seams, etc. This allows the user to easily distinguish the first wall from the second wall, that is, the top wall and the bottom wall of the inflatable mattress.

For further example, although the first to sixth embodiments are all inflatable mattresses, it should be contemplated that the concept of the present invention may also be applied to, for example, other inflatable products such as an inflatable pool and an inflatable seat.

In further examples, the corrugation of the sheet-like tensioning member 108 may alter along the length of the inflatable product such as to form different support regions of the inflatable product. That is, in a first part of the inflatable product the width of the first and/or second segments 112, 114 may be different from the width of the first and/or second segments 112, 114, in a second part of the inflatable product.

It should also be understood that the components and features described herein can be made of a variety of materials including, but not limited to, polymer, rubber, metal, and other suitable materials or combinations thereof well known to those skilled in the art. The embodiments shown in FIGS. 1 to 11 only show the shapes, dimensions, and arrangement methods of optional components of the inflatable product according to the present invention. However, the embodiments are merely illustrative but not restrictive, and other shapes, dimensions and arrangement methods may also be employed without departing from the spirit and scope of the present invention.

Although the technical content and technical features of the present invention are disclosed above, it should be understood that, under the inventive concept of the present invention, those skilled in the art can easily make modifications, variations, and equivalents of these embodiments on the basis of the disclosed content. For example, the illustrated or described features as part of an embodiment can be used with another embodiment to provide a further embodiment. The present disclosure is intended to cover these modifications, variations, and equivalents. The description of the above implementations is illustrative but not restrictive, and the scope of protection of the present invention is determined by the claims.

### List of reference signs

- 0: And more preferably about
- 1: Inflatable mattress
- 2: Top sheet
- 3: Bottom sheet
- 4: Tensioning member
- 10: Inflatable mattress
- 102: First wall
- 103: Peripheral edge
- 104: Second wall
- 105: Peripheral edge
- 106: Inflatable chamber
- 108: Sheet-like tensioning member
- 110: Air valve
- 112: First segment
- 113a: Raised portion
- 113b: Raised portion
- 114: Second segment
- 115a: Raised portion
- 115b: Raised portion
- 116: Tensioning segment
- 118: First welding region
- 120: Second welding region
- 122: First welding seam
- 124: Second welding seam
- 126: Thermal insulation layer
- 128: Connecting piece
- 130: Third wall
- 131: Top edge
- 132: Bottom edge

## Claims

1. An inflatable product (10), **characterized by** comprising:
a first wall (102);
a second wall (104) disposed opposite the first wall (102);
an inflatable chamber (106) defined by the first wall (102) and the second wall (104);
a sheet-like tensioning member (108) disposed in the inflatable chamber (106), and comprising:
a plurality of first segments (112) sequentially welded to the first wall (102);
a plurality of second segments (114) sequentially welded to the second wall (104); and
a plurality of tensioning segments (116), each of the plurality of tensioning segments (116) extending between the corresponding first segment (112) and the corresponding second segment (114),
wherein the plurality of first segments (112) and the plurality of second segments (114) are respectively welded to the first wall (102) and the second wall (104) in an alternating manner such that the sheet-like tensioning member (108) has a corrugated cross section, and each first segment (112) is partially welded to the first wall (102).

2. The inflatable product (10) according to claim 1, wherein each second segment (114) is partially welded to the second wall (104).

3. The inflatable product (10) according to claim 1 or 2, wherein each first segment (112) is welded to the first wall (102) along a first welding region (118), and each second segment (114) is welded to the second wall (104) along a second welding region (120).

4. The inflatable product (10) according to claim 3, wherein the first welding region (118) comprises at least one first welding seam (122); and/or the second welding region (120) comprises at least one second welding seam (124).

5. The inflatable product (10) according to claim 3 or 4, wherein the plurality of first segments (112) are disposed at intervals in the length direction (L) of the inflatable product (10), and the plurality of second segments (114) are disposed at intervals in the length direction (L),
wherein the first welding region (118) comprises two linear first welding seams (122) respectively located on opposite sides of each first segment (112) in the length direction (L),
and/or the second welding region (120) comprises two linear second welding seams (124) respectively located on opposite sides of each second segment (114) in the length direction (L).

6. The inflatable product (10) according to claim 5, wherein a first distance (NW1) between the two first welding seams (122) of each first segment (112) is approximately equal to a second distance (NW2) between two adjacent first welding seams (122) respectively on two adjacent first segments (112),
and/or a third distance (NW3) between the two second welding seams (124) of each second segment (114) is approximately equal to a fourth distance (NW4) between two adjacent second welding seams (124) respectively on two adjacent second segments (114).

7. The inflatable product (10) according to claim 5, wherein a first distance (NW1) between the two first welding seams (122) of each first segment (112) is less than a second distance (NW2) between two adjacent first welding seams (122) respectively on two adjacent first segments (112),
and/or a third distance (NW3) between the two second welding seams (124) of each second segment (114) is less than a fourth distance (NW4) between two adjacent second welding seams (124) respectively on two adjacent second segments (114).

8. The inflatable product (10) according to claim 4-7, wherein the width (LW1) of the first welding seam (122) is 0.5% to 25% of the width (S1) of the first segment (112) in the length direction (L) of the inflatable mattress (10);
and/or the width (LW2) of the second welding seam (124) is 0.5% to 25% of the width (S2) of the second segment (114) in the length direction (L) of the inflatable mattress (10).

9. The inflatable product (10) according to any one of claims 4 to 8, wherein the first welding seam (122) is linear or wave-shaped;
and/or the second welding seam (124) is linear or wave-shaped.

10. The inflatable product (10) according to claim 4, wherein the first welding region (118) comprises an annular first welding seam (122) extending along a peripheral edge of the first segment (112); and/or the second welding region (120) comprises an annular second welding seam (124) extending along a peripheral edge of the second segment (114).

11. The inflatable product (10) according to any one of the previous claims, wherein the tensioning segment (116) and the adjacent first segment (112) are mutually at a first angle (α), and the first angle (α) is an acute angle or is a right angle;
and/or the tensioning segment (116) and the adjacent second segment (114) are mutually at a second angle (β), and the second angle (β) is an acute angle or is a right angle.

12. The inflatable product (10) according to claim 11, wherein the acute first angle (α) is greater than or equal to 70° and less than 90°;
and/or the acute second angle (β) is greater than or equal to 70° and less than 90°.

13. The inflatable product (10) according to any one of the previous claims, wherein the sheet-like tensioning member (108) is made of one or more of polyvinyl chloride, thermoplastic polyurethane elastomer, polyurethane, polypropylene, polyethylene, polyethylene terephthalate, ethylene-vinyl acetate copolymer and polyamide, or
the sheet-like tensioning member (108) comprises a non-woven fabric or a fabric.

14. The inflatable product (10) according to any one of the previous claims, wherein at least one side of the sheet-like tensioning member (108) is plated with a metal.

15. The inflatable product (10) according to any one of claims 3 to 14, wherein the inflatable product (10) further comprises at least one connecting piece (128) and at least one thermal insulation layer (126) which are disposed in the inflatable chamber (106),
wherein the connecting piece (128) and the thermal insulation layer (126) are disposed between the first wall (102) and the sheet-like tensioning member (108), and are welded to the first wall (102) along the first welding region (118), and the connecting piece (128) is disposed between the first wall (102) and the thermal insulation layer (126); and/or
the connecting piece (128) and the thermal insulation layer (126) are disposed between the second wall (104) and the sheet-like tensioning member (108), and are welded to the second wall (104) along the second welding region (120), and the connecting piece (128) is disposed between the second wall (104) and the thermal insulation layer (126).

16. The inflatable product (10) according to claim 15, wherein the thermal insulation layer (126) is a one-piece batting-type sheet material and made of fibers.

17. The inflatable product (10) according to claim 15 or 16, wherein the connecting piece (128) is made of one or more of polyvinyl chloride, thermoplastic polyurethane elastomer, polyurethane, polypropylene, polyethylene, polyethylene terephthalate, ethylene-vinyl acetate copolymer, and polyamide.

18. The inflatable product (10) according to any one of the previous claims, wherein the inflatable product (10) further comprises a third wall (130), the first wall (102) being connected to the second wall (104) by means of the third wall (130), such that the first wall (102), the second wall (104) and the third wall (130) jointly define the inflatable chamber (106).

19. The inflatable product (10) according to any one of the previous claims, wherein the length of the sheet-like tensioning member (108) is 80%-100% of the length of the inflatable mattress (10), and the width of the sheet-like tensioning member (108) is 50%-100% of the width of the inflatable mattress (10).

20. The inflatable product (10) according to any one of the previous claims, wherein the inflatable product (10) is an inflatable mattress.

21. The inflatable product (10) according to claim 6 or 7, wherein the sheet-like tensioning member is made of a non-woven fabric, the weight per unit area of the non-woven fabric, the first distance (NW1), the second distance (NW2), the third distance (NW3) and the fourth distance (NW4) satisfy at least one of the following options:
a) the ratio of the weight per unit area of the non-woven fabric to the first distance (NW1) is in a range of 5 g/m²/cm to 20 g/m²/cm;
b) the ratio of the weight per unit area of the non-woven fabric to the second distance (NW2) is in a range of 5 g/m²/cm to 20 g/m²/cm;
c) the ratio of the weight per unit area of the non-woven fabric to the third distance (NW3) is in a range of 5 g/m²/cm to 20 g/m²/cm; and
d) the ratio of the weight per unit area of the non-woven fabric to the fourth distance (NW4) is in a range of 5 g/m²/cm to 20 g/m²/cm.
